Europäisches Patentamt

European Patent Office

Office européen des brevets

(19)

(11) Publication number: **0 171 674**
**A2**

(12) **EUROPEAN PATENT APPLICATION**

(21) Application number: **85109297.3**

(22) Date of filing: **24.07.85**

(51) Int. Cl.⁴: **G 08 C 19/00**
**G 08 C 25/00**

(30) Priority: **14.08.84 IT 8412384**

(43) Date of publication of application:
**19.02.86 Bulletin 86/8**

(84) Designated Contracting States:
**AT BE CH DE FR GB IT LI LU NL SE**

(71) Applicant: **VELTRONIC S.p.A.**
**Piazza Aldo Moro, 17**
**I-35030 Sarmeola di Rubano (Padova)(IT)**

(72) Inventor: **Rizzo, Corrado**
**Via Terme, 215**
**I-35036 Montegrotto Terme (Padova)(IT)**

(74) Representative: **Piovesana, Paolo**
**Corso del Popolo, 70**
**I-30172 Venezia-Mestre(IT)**

(54) Electronic apparatus particularly suitable for the processing, memorising and returning of electrical signals and coded messages.

(57) The electronic apparatus particularly suitable for processing, memorising, utilising and returning electrical signals and coded messages, comprises essentially two sections (A, B), the first (A) constituting a self-contained, self-powered information unit provided with circuits for the reception of coded messages via wire and/or via the ether, decoding circuits for said messages, and monitoring circuits and/or circuits for automatically checking correct operation, the second (B) constituted essentially by a plurality of different units (B1, B2, B3, B4) to which, singularly and/or simultaneously, the first section (A) can be connected for the transfer, processing, recording and utilisation of the signals provided by said section (A) in relation to the specific function to be performed, and for the deactivation of said section (A).

./...

FIG.1

This invention relates to an electronic apparatus particularly suitable for the processing, memorising and returning of electrical signals and coded messages.

With the continual development of electronic technology, there is an ever-increasing use of apparatus arranged to perform transmission, processing, memorising, retransmission, electrical signal return and coded message return functions. Such apparatus are used in the most widespread sectors, including remote surveillance, remote control, monitoring, self-checking etc.

Normally, an apparatus is constructed to provide precise services, and for this reason is designed for specific applications or classes of application which require those particular services. If the application changes, such apparatus must of necessity undergo complete modification, and each of them becomes only partly utilised in consequence.

It has also been proposed to combine several apparatus into a single apparatus able to perform several functions, but obviously such a method becomes excessively burdensome in terms of constructional complexity, cost and overall size in all those cases requiring only some of the services which the apparatus is able to offer.

An object of the invention is to provide an apparatus of the initially indicated type, which is able to perform all the services required by the user, and only those.

A further object of the invention is to provide an apparatus which can increase the number of functions performed by simply adding parts, without the pre-existing parts requiring modification, alteration or replacement.

A further object of the invention is to provide an apparatus which is of secure and reliable operation under any condition of use.

A further object of the invention is to provide an apparatus able to supply a chronological documentation of the events being monitored.

A further object of the invention is to provide an apparatus which ensures privacy of the effected transmissions, whether these transmissions are made by direct connection or by hertzian means.

All these objects are attained according to the invention by an electronic apparatus particularly suitable for processing, memorising, utilising and returning electrical signals and coded messages, characterised by comprising essentially two sections, the first constituting

- 2 -

a self-contained, self-powered information unit provided with circuits for the reception of coded messages via wire and/or via the ether, decoding circuits for said messages, and monitoring circuits and/or circuits for automatically checking the correct operation, the second constituted essentially by a plurality of different units to which, singularly and/or simultaneously, the first section can be connected for the transfer, processing, recording and utilisation of the signals provided by said section in relation to the specific function to be performed, and for the deactivation of said section.

Advantageously the apparatus can comprise means for decoding and identifying received coded messages, means for comparing said messages with messages contained in its own non-volatile memories, and means for transferring the results of the effected comparison to user devices pertaining to said first section and/or to said second section.

Again according to the invention, the second section can comprise a unit to which the first section can be connected, said second section being provided with means for causing said memories to be read, and for making the possibly processed results of said reading available.

Advantageously the first section can comprise a unit which itself comprises subunits arranged to recognise coded messages received from another unit of the same section, each subunit comprising a non-volatile memory containing a previously inserted code, an ordering circuit arranged to provide a signal sequence corresponding to the recognised code, an amplifier circuit arranged to provide at its output a signal corresponding to the recognised code, and possibly a detector circuit arranged to provide at its output a differential signal corresponding to recognition or non-recognition.

Advantageously, the second section can comprise a unit which, independently of the unit of the first section, is able to receive coded messages and to compare them with any message decoded and recognised by the unit, in order to provide at its output a signal denoting recognition or non-recognition.

Again according to the invention, the second section to be used for remote control functions can comprise a unit comprising at least one decoder for the messages recognised by the subunits, and acting on an amplifier for controlling an external user device.

Advantageously, the second section can comprise an apparatus for the processing, monitoring, recording and direct and/or retransmitted signalling of the signals denoting recognition of the coded messages received from the section output, and of the signals generated by the section.

The present invention is further clarified hereinafter in terms of a preferrred embodiment with reference to the accompanying drawings in which:

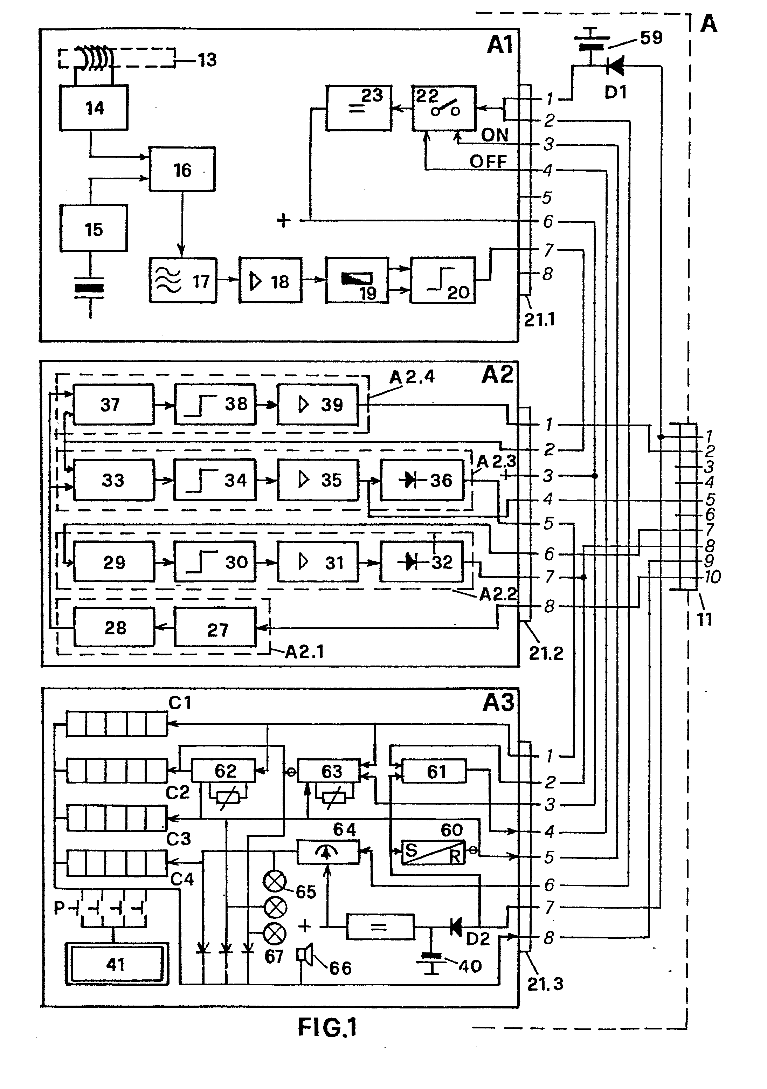

Figure 1 illustrates diagrammatically the first section of the apparatus according to the invention, and

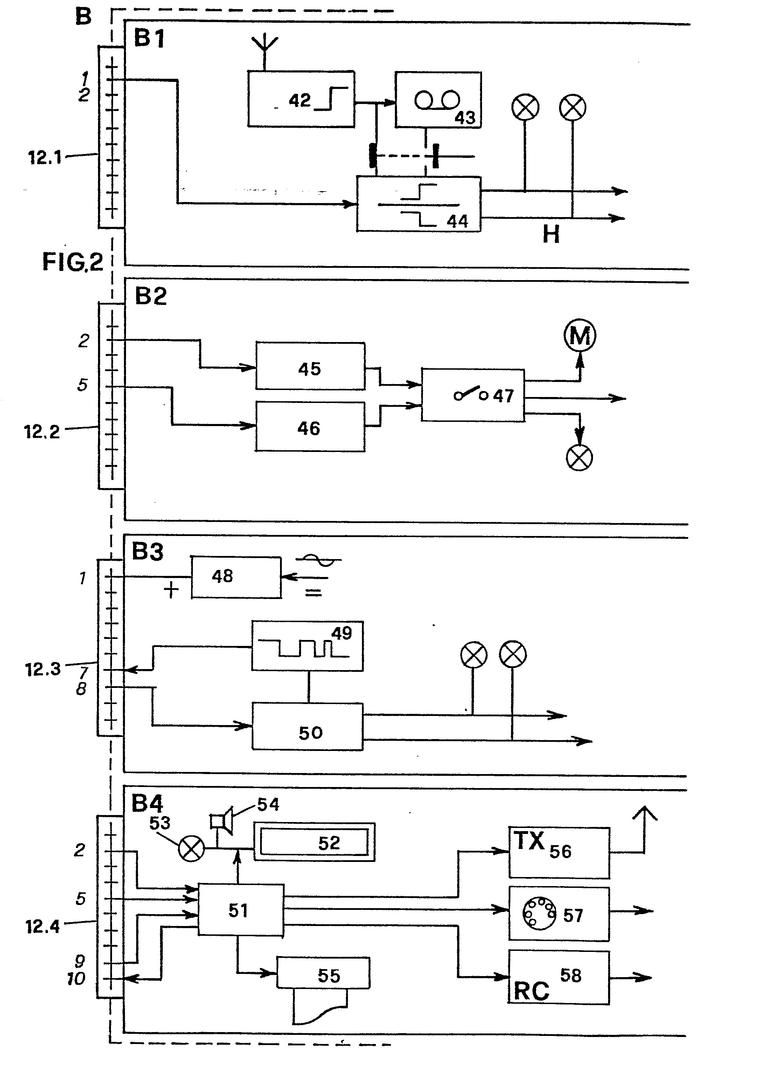

Figure 2 illustrates the second section.

As can be seen from the drawings, the apparatus according to the invention can be illustrated schematically as two separate sections indicated overall by A and B. The section A is itself divided into three units A1, A2, A3, which are simultaneously present and suitably connected together and to a common connector 11. The section B is in reality constituted by a plurality of units B1, B2, B3, B4 which in the illustrated embodiment are shown as four in number merely to indicate four possible functions which the apparatus is able to perform. Each unit B1, B2, B3 and B4 is provided with a connector 12.1, 12.2, 12.3, 12.4, which can be connected to the connector 11 of the section A.

The unit A1 of the apparatus according to the invention constitutes essentially a radio frequency receiver. It comprises an antenna 13 with its amplifier 14 and a local oscillator 15, which are connected to the input of a mixer 16. The output of the mixer 16 is connected by way of a band-pass filter 17 and an intermediate frequency amplifier 18 to a discriminator 19, which is itself connected to a code formulator-reconstructor 20, the output of which is connected to the pin 7 of the connector 21.1, with which the unit A1 is provided. The unit A1 also comprises an ON-OFF switch 22 and a voltage stabiliser 23 arranged to power the unit A1 and the unit A2, and to provide, by way of the pin 3 of its connector 21.3, the voltage signal to the unit A3 for the purpose to be described hereinafter.

The unit A2 comprises four different subunits A2.1, A2.2, A2.3 and A2.4 for logic signal treatment.

More particularly, the subunit A2.1 comprises a counter 27 with its input connected to the pin 8 of the connector 21.2, and its output connected to a register selector 28.

The subunit A2.2. comprises a memory 29 with its input connected to the pin 6 of the connector 21.2 and its ouput connected, by way of an ordering circuit 30, amplifier 31 and rectifier 32, to the pin 7 of said connector 21.2.

The subunit A2.3. is similar to the subunit A2.2, ie comprises a memory 33 with one input connected to the pin 2 of the connector 21.2, and its output connected by way of an ordering circuit 34, amplifier 35 and rectifier 36 to the pin 5 of the connector 21.2. In contrast to the subunit A2.2, in the subunit A2.3, a second input of the memory 33 is directly connected to the output of the register selector 28 of the subunit A2.1, and the output of the amplifier 35 is also directly connected to the connector 21.2 (pin 4).

The subunit A2.4 comprises a memory 34 with one input connected to the pin 2 of the connector 21.2, another input connected to the output of the register selector 28, and its output connected by way of an ordering circuit 38 and amplifier 39 to the pin 1 of the connector 21.2.

The unit A3 constitutes a self-contained unit provided with a self-rechargeable battery 40 and is responsible for the functional and operational supervision of the entire section A, as will be more apparent hereinafter. It comprises four counters C1, C2, C3, C4 which are connected by pushbuttons P to a display unit 41 and also connected to optical and acoustic signalling devices for indicating the events being monitored. The inputs of the counters C1, C2, C3 and C4 are connected to the pins of the connector 21.3 directly and/or by way of logic circuits which enable the scheduled monitoring functions to be performed, and which will be referred to as required during the course of the description of operation.

As stated, the section B is in reality constituted by several separate and self-contained units B1, B2, B3, B4, each able to receive in their connector 12.1, 12.2, 12.3 and 12.4 the connector 11 of the section A in order to connect them together for the purpose of performing the predetermined functions.

In particular, the unit B1 comprises a self-contained receiver 42 complete with decoder, having its output connected to the input of a recorder 43 and to one of the inputs of a comparator 44, to the other input being alternatively connected the output of the recorder 43. The other input of the comparator 44 is connected to the pin 2 of the connector 12.1. The two outputs of the comparator 44, corresponding to the states of coincidence and non-coincidence between the signal received through the pin 2 and the signal received from the receiver 42, or alternatively from the recorder 43, are displayed by means of a luminuous signalling device and are also transferable to the outside for any further use.

The unit B2, arranged to perform remote control functions, comprises essentially decoders 45 and 46 (two in the particular illustrated embodiment) with their input connected respectively to the pin 2 and pin 5 of the connector 12.2 and their outputs connected to an amplifier circuit 47 which provides as output an electrical signal for the required remote control use.

The unit B3 constitutes essentially a power unit and a mutual recognition unit with the section A. It comprises a power pack 48 with its output connected to the pin 1 of its own connector 12.3, and a code generator 49 with one output connected to the pin 7 and another output connected to one input of the comparator 50, the other input of which is connected to the pin 8 of said connector 12.3. The two coincidence and non-coincidence outputs of the comparator 50 are displayed by a luminous signalling device and can also be transferred externally for any further use.

The units B4 constitutes essentially a monitoring unit for an automatic data processing centre. It comprises a system 51 for processing logic signals and a series of peripheral devices constituted for example by alphanumerical display devices 52, optical signalling devices 53 and acoustic signalling devices 54, printers 55, hertzian transmitters of phonic messages 56, transmitters of phonic messages by telephone with automatic number dialling 57, remote control actuators 58 etc.

The inputs of the processing system 51 are connected to the pins 2, 5 and 9 of the connector 12.4, and one output of the system is also connected to the pin 10 of the same connector 12.4.

The operation of the apparatus according to the invention is described hereinafter on the assumption that one or two transmitting apparatus (not shown on the drawings) exist for transmitting coded messages for remote control and remote information functions.

Under rest conditions the battery 59, with which the section A is provided, powers the unit A1 by way of the pin 1 of the connector 21.1 and at the sme time feeds a voltage signal to the unit A3 by way of the pin 6 of the connector 21.3. Assuming that an ON signal is present at the pin 3 of the connector 21.1, the switch 22 allows the voltage stabiliser 23 to be powered. In this manner, the unit A1 is able to receive through the antenna 13 any coded messages transmitted by one or more transmitting apparatus, amplify them, filter them, detect them and reconstitute them before making them available at the  pin 7 of the  connector 21.1.

As stated, the unit A2 comprises the subunits A2.1, A2.2, A2.3 and A2.4, which in the illustrated embodiment are shown as four in number, but could also be of greater number and could be suitably multiplexed.

The logic signal trains originating from the pin  7 of the  connector 21.1  are fed  through the  pin 2  of  the connector 21.2 to the non-volatile memories 33 and 37, where they are compared with the sequences memorised therein  and, if recognised as coinciding  with one of  these, are fed  to the logic  signal  ordering circuits  34  or 38  and,  after amplification in 35 or 39, are  made available at the pin  1 or 4  of the  connector 21.2.  Obviously, only  those  codes recognised by the members 33 or  37, and no other code,  can be present  at these  pins in  the form  of amplified  logic signals.

The  subunit  A2.3  is  also  provided  with  the rectifier 36, which provides at its output, at the pin 5  of the connector  21.2, a  high (or  low)  logic signal  if  an overall train which has been recognised by the memory 33  is present.

As already stated,  the stated  number of  subunits A2.3 and A2.4 is by way of example only, and in reality this number could also be greater.

The subunit A2.2 is similiar to the subunit A2.3, and differs from it in that the memory 29 performs the function of recognising a code inserted in the form of logic signals directly through the pin 6 of the connector 21.2 and returning to the pin 7 a high or low logic signal denoting recognition or non-recognition of the inserted code by the memory 29.

Again with regard to the subunit A2.2, this has been shown as a single entity but in reality it could be in the form of several constructionally and functionally identical subunits arranged to recognise different coded messages.

The purpose of the subunit A2.1 is to read the memories 33 and 37 of the subunits A2.3 and A2.4 respectively, when commanded by a signal fed to the pin 8 of the connector 21.2.

As stated, the section A is provided with two chargeable groups of batteries 40 and 59 which are cyclically recharged. This recharging is effected by applying a source of external energy to the pin 1 of the connector 11 or, in other terms, by inserting the connector 11 which is rigid with the section A into a corresponding connector of another suitable apparatus (for example B3), with the function of providing the pin 1 with the necessary electrical energy.

At the moment of connection, there is therefore voltage present at the input of the diodes D1 (having its output connected to the pin 1 of the connector 21.1 of the unit A1) and D2 (having its input connected to the pin 7 of the connector 21.3 of the unit A3). The voltage at the input of D2 is also fed to the input of a contact braker 60 of A3 and to an AND gate 61 of A3. The contact breaker 60 is arranged to provide at the pin 5 of the connector 21.3 a set signal if voltage is absent at its input (ie at the pin 1 of the connector 11). The AND gate 61 is arranged to provide a high signal to the pin 4 of the connector 21.3 if a high signal is present at its inputs, ie at the pins 2 and 7 of the connector 21.3. By this means, if a coded message from another apparatus enters at the pin 6 of the connector 21.2, and this signal is correctly recognised by the subunit A2.2 of A2, there is present at the pin 7 of 21.2 a high signal which, if voltage is present at the pin 7 of 21.2, gives at the output of the AND gate 61, ie at the pin 4 of 21.3, the OFF signal which deactivates the switch 22 of A1. In other words, the switch 22 of A1 is activated only if recharging voltage is absent at the pin 1 of the connector 11, and instead is deactivated if voltage is present at that pin, with the simultaneous recognition by the subunit A2.2 of A2 of a coded message which has entered through the pin 7 of the connector 11 (and thus through the pin 6 of the connector 21.2) from another apparatus connected to A.

The set signal of the contact breaker 60 also activates an AND gate 62, a NAND gate 63 and the counter C3 of the unit A3. The purpose of the counter C3 is to signal, on request, the period of activity of the apparatus starting from the moment in which the charging voltage of the batteries 40 and 59 lacks, for the double purpose of providing a positive indication of this event, and of indicating the residual active life of the batteries themselves.

If the absence of the recharging voltage should persist and the main internal battery slowly discharges, the voltage signal which this feeds to the pin 6 of 21.3 is fed to the comparator 64 of A3, which, in the case of deviation from the preset value, feeds a signal to the counter C4 of A3, to an optical signalling device 65, to an acoustic signalling device 66 and to the pin 8 of the connector 21.3 for any use external to the section A.

At the moment of activation of the apparatus, the voltage signal present at the pin 6 of 21.1 is fed via pin 3 of 21.3 to an input of the NAND gate 63, which is timed. If after a predetermined waiting time the signal from pin 5 of 21.2 indicating recognition of the coded message by the subunit A2.3 is not present at the other gate input, the NAND gate 63 activates the counter C2 and at the same time activates the optical signalling device 67 and acoustic signalling device 66. This function characterises the apparatus because it enables the absence of a message to be detected, this absence indicating either malfunction of the message emitter or emitters, or malfunction of the message receiver (unit A1).

In contrast, if within the preset time the signal recognised by the subunit A2.3 reaches the NAND gate 63, this gate is deactivated, a sign of correct operation of the apparatus.

The same signal recognised by the unit A2.3 is also fed directly to the counter C1 of A3, for chronological recording of the effected recognition, and at the same time is also fed to an input of the AND gate 62, which is timed with a waiting time exceeding that of the NAND gate 63.

Consequently the recognition signal corresponding to the effected activation of the section A is "covered" by the waiting time of this AND gate 62, and a subsequent identical signal recognised by the subunit A2.3. of A2 and corresponding to a positive indication of the event being monitored, activates the counter C2, the optical signalling device 67 and the acoustic signalling device 66, and at the same time feeding a signal to the pin 8 of 21.3 for possible external use.

From the aforegoing description it is apparent that the section A is essentially able to signal and chronologically record the events of major interest, such as:

- the moment in which the battery recharging voltage ceases and thus the activity of the apparatus commences (counter C3);

- the moment corresponding to the end of the waiting period of the NAND gate 63, which has passed without the recognised signal having been received through pin 1 (counter C2);

- the moment in which the coded signal has been recognised confirming correct operation of the transmitting apparatus controlled by the event to be detected, and of

- 16 -

the receiving unit A1 (counter C1);

- the moment in which any coded message is received subsequent to the waiting time of the AND gate 62 (counter C2);

- the moment in which the voltage of the main battery 59 falls below the predetermined value (counter C4).

More signalling devices and/or counters can obviously be provided in the unit A3 for a more complete checking of remote events to be monitored.

The functions heretofore described regard the section A in the sense that they relate to the monitoring of correct operation of the apparatus and/or of messages or signals which it receives by galvanic or hertzian means and/or which are self-generated, within either predetermined or random times.

However, the apparatus according to the invention is also able to perform further important functions if connected to external apparatus indicated by B1, B2, B3 and B4, which are described individually hereinafter in terms of their operation. Any one of the units B1, B2, B3 and B4 would be connected to the connector 11 of the section A by means of their connectors 12.1, 12.2, 12.3 and 12.4, which have equal pins in terms of number and distribution.

The unit B1, to which the section A can be connected, has the function of checking coincidence between two signal trains, and to emit two different signals according to whether coincidence has been found or not.

The signal propagated by hertzian means from one or more emitters is received and decoded separately by B1 and by A. However whereas B1 receives and decodes all messages characterised by a prearranged composition with recognisable start and stop signals, the section A receives the messages and identifies them in terms of contents "before" retransmitting them to the outside through the pin 2 of the connector 11.

Consequently two messages enter the comparator 44 of the unit B1, namely a decoded message originating from the receiver 42 of B1 and a decoded and recognised message originating from the subunit A2.4 of A, by way of the pin 1 of 21.2, the pin 2 of 11 and the pin 2 of 12.1.

The messages received by the unit B1 can also be memorised in the recorder 43, for use in the comparator 44 in deferred times in addition to real time, and to obtain in this manner a stable documentation regarding the messages received by B1 (and any coincidence with the message received and identified unequivocally by the section A).

The unit B2, to which the section A can be connected, has the function of transducing into output electrical signals the control signals fed to its input through the pin 2 or 5 of the connector 11.

The coded message received by A1 is fed via pin 2 of 21.2 to the subunits A2.3 and A2.4. If recognition is effected by one or the other, the corresponding recognised signal is fed through the pins 2 or 5 of the connectors 11 and 12.2 to the decoders 45 and 46, and leaves this, amplified in 47, for activating the scheduled apparatus.

Obviously this remote control function, which provides for the previous recognition of the received signals, can without doubt be considered unequivocal.

The unit B3, to which the section A can be connected, performs the (unequivocal) functions of power supply, mutual recognition and deactivation of the section A, and confirmation of recognition or non-recognition.

As described heretofore, the section A automatically starts to operate when the recharging voltage of the internal batteries 40 and 59 is absent, and is deactivated by the simultaneous presence of said voltage and a high signal at the pin 2 of the connector 21.3. Consequently, after the code generator 49 of B3 has generated a signal, if it is recognised by the subunit A2.2, it generates a high signal at the pin 7 of 21.2, this signal on the one hand deactivating the section A by way of the pin 2 of 21.3, the AND gate 61, the pin 4 of 21.3, the pin 4 of 21.1 and the switch 22, and on the other hand returning to the unit B3 via the pin 8 of 11 for comparison with the signal generated by 49, with indication of coincidence or non-coincidence, and for possible external use.

The unit B4, to which the section A can be connected, performs the function of monitoring an automatic data processing centre.

In this case, the signals generated by the unit A3 are fed to the unit B4 via the pins 8 of 21.3 and 9 of 11. These signals are used by the unit B4 both in order to display indications of malfunction or abnormalities, and to proceed to the remote transmission of processed signals originating from information from the section A.

The unit B4 also has the function of reading the codes contained in the memories 33 and 37 of A2. For this purpose the control unit 51 feeds a train of signals via the pin 10 of 11 and the pin 8 of 21.2 to the counter 27 of A2, which feeds them to the register selector 28, which is itself arranged to read the memories 33 and 37.

The result of this reading is fed, in the form of a logic code, to the pins 2 and 5 of the connector 11 and from here to the processing centre 51, which comprises means for displaying, printing and externally utilising the results of the processing of the received signals.

CLAIMS

1. An electronic apparatus particularly suitable for processing, memorising, utilising and returning electrical signals and coded messages, characterised by comprising essentially two sections (A, B), the first (A) constituting a self-contained, self-powered information unit provided with circuits for the reception of coded messages via wire and/or via the ether, decoding circuits for said messages, and monitoring circuits and/or circuits for automatically checking correct operation, the second (B) constituted essentially by a plurality of different units (B1, B2, B3, B4) to which, singularly and/or simultaneously, the first section (A) can be connected for the transfer, processing, recording and utilisation of the signals provided by said section (A) in relation to the specific function to be performed, and for the deactivation of said section (A).

2. An apparatus as claimed in claim 1, characterised by comprising means for decoding and identifying received coded messages, means for comparing said messages with messages contained in its own non-volatile memories (33, 37) and means for transferring the results of the effected comparison to user devices pertaining to said first section (A) and/or to said section (B).

- 1 -

3.     An apparatus as claimed in claims 1 and 2, characterised by comprising means for reading the memories (33, 37) containing the previously inserted coded messages.

4.     An apparatus as claimed in claims 1 and 3, characterised in that the section (B) comprises a unit (B4) to which the section (A) can be connected, said section (B) being provided with means (51) for causing said memories (33, 37) to be read and for making the possibly processed results of said reading available.

5.     An apparatus as claimed in claim 1, characterised in that the section A comprises rechargeable batteries (59) which are automatically connected in the absence of recharging voltage, and are automatically disconnected if the recharging voltage is present and a coded message originating from the unit (B3) which provides the recharging voltage has been simultaneously recognised.

6.     An apparatus as claimed in claim 1, characterised in that the section (A) comprises a unit (A2), itself comprising subunits (A2.3, A2.4) arranged to recognise coded messages received from another unit (A1) of the same section (A), each subunit (A2.3, A2.4) comprising a non-volatile memory (33, 37) containing a previously inserted code, an ordering circuit (34, 38) arranged to provide a signal sequence corresponding to the recognised code, an amplifier circuit (35, 39) arranged to provide at its output a signal corresponding to the recognised code, and possibly a detector circuit (36) arranged to provide at its output a differential logic signal corresponding to recognition or non-recognition.

7. An apparatus as claimed in claims 1 and 4, characterised in that the unit (A2) comprises at least one subunit (A2.1) controllable by the unit (B4) of the section (B) and arranged to read the memories (33, 37), to externally transfer the result of said reading.

8. An apparatus as claimed in claims 1 and 5, characterised in that the unit (A2) is provided with a subunit (A2.2) comprising a non-volatile memory (29) which can be interrogated by an external unit (B3) in order to provide at its output a signal denoting recognition or non-recognition of a coded signal originating from said unit (B3), following its comparison with the code inserted into said memory (29).

9. An apparatus as claimed in claim 1, characterised by comprising a circuit (64) for comparing the voltage of the rechargeable power batteries (59) with a predetermined voltage, said circuit comprising signalling devices (65, 66) which are activated when the said battery voltage falls below said predetermined voltage.

10.     An apparatus as claimed in claim 1, characterised by comprising a circuit (62, 63) arranged to signal the effected recognition of a received message, if the apparatus is activated.

11.     An apparatus as claimed in claims 1 and 10, characterised by comprising a NAND gate (63) having one input connected to the message recognition circuit and its output connected to recording and/or signalling circuits, said NAND gate (63) being of delayed closure.

12.     An apparatus as claimed in claims 1, 10 and 11, characterised by comprising an AND gate (62) having one input connected to the message recognition circuit and its output connected to recording and/or signalling circuits, the opening of said gate being delayed by a time not less than the waiting time of the NAND gate (63).

13.     An apparatus as claimed in claims 1, 10, 11 and 12, characterised by comprising a counter (C1) for chronologically recording the effected recognition of a received coded message.

14.     An apparatus as claimed in claims 1 and 13, characterised by comprising a counter (C2) for chronologically recording the effected recognition of a message after a waiting time exceeding the delay in the opening of the AND gate (62).

15. An apparatus as claimed in claims 1 and 13, characterised by comprising a counter (C2) for chronologically recording the non-recognition of a message within a time equal to the delay in the closure of the NAND gate (63).

16. An apparatus as claimed in claims 1 and 13, characterised by comprising a counter (C3) for chronologically recording the event consisting of the absence of recharging voltage for the batteries (59).

17. An apparatus as claimed in claims 1 and 13, characterised by comprising a counter (C4) for chronologically recording the event consisting of a reduction in the supply voltage of the batteries (59) to below a predetermined threshold value.

18. An apparatus as claimed in claims 1, 2 and 6, characterised in that the section (B) comprises a unit (B1) arranged to receive coded messages independently of the unit (A1) of the section (A), and to compare them with any message decoded and recognised by the unit (A2), to provide at its output a signal denoting recognition or non-recognition.

19.    An apparatus as claimed in claims 1 and 18, characterised in that the unit (B1) comprises a recorder (43) in which all the messages received and decoded by the appropriate circuit (42) of said unit (B1) are memorised.

20.    An apparatus as claimed in claims 1 and 18, characterised in that the unit (B1) comprises a comparator circuit (44) with one input connected directly to the output of the decoded message recognition circuit (A2.4) and its other input connectable at choice either to the reception and decoding circuit (42) for comparison in real time, or to a suitable recorder (43) for comparison in deferred time.

21.    An apparatus as claimed in claim 1, characterised in that the section (B) for application with remote control functions comprises a unit (B2) comprising at least one decoder for the messages recognised by the subunits (A2.4, A2.3) which acts on a control amplifier (47) for an external user device.

22.    An apparatus as claimed in claims 1 and 6, characterised in that the section (B) comprises a system (51) for the processing, monitoring, recording and direct and/or transmitted indication of the signals denoting recognition of the coded messages received from the output (A1) of the section (A), and of the signals generated by the
section (A).

FIG.1

2/2

0171674

FIG.2